# EUROPEAN PATENT SPECIFICATION

(11) **EP 4 253 250 B1**
(45) Date of publication and mention of the grant of the patent: **16.07.2025**
(21) Application number: 23164814.8
(22) Date of filing: 28.03.2023
(51) Int. Cl.: B64D 27/24, B64D 31/06, B64D 27/33, B64D 31/18, B64D 35/025, F02C 9/00, F02K 3/00, B64D 27/02

(54) **METHOD AND SYSTEM FOR REDUCING NOISE OF HYBRID POWER PLANT**
VERFAHREN UND SYSTEM ZUR GERÄUSCHREDUZIERUNG EINES HYBRIDKRAFTWERKS
PROCÉDÉ ET SYSTÈME DE RÉDUCTION DU BRUIT D'UNE CENTRALE ÉLECTRIQUE HYBRIDE

(30) Priority: 29.03.2022 US 202217656938
(43) Date of publication of application: 04.10.2023
(73) Proprietor: PRATT & WHITNEY CANADA CORP., Longueuil, Québec J4G 1A1 (CA)
(72) Inventor: CHEN, Li-Jen, (01BE5) Longueuil, J4G 1A1 (CA)
(74) Representative: Dehns

(56) References cited:
- EP-A1- 3 936 712
- US-A1- 2014 156 166
- US-A1- 2018 346 139
- US-A1- 2021 171 212
- US-A1- 2022 042 465

## Description

### TECHNICAL FIELD

The invention relates generally to aircraft engines. More particularly, the present invention relates to hybrid power plants for aircraft, and systems and methods used to reduce noise emitted by such power plants.

### BACKGROUND

Hybrid power plants employ two or more different types of energy sources to provide propulsive power to an aircraft. Compared to more conventional, single engine, designs, hybrid power plants provide additional flexibility with respect to how the required power is generated, by selecting an appropriate work split ratio between the engine types. This work split ratio may, for example, be selected in view of operating conditions, power requirements, fuel economy, and/or other considerations. Much like single engine aircraft power plants, hybrid power plants remain subject to noise regulations, for instance when operating near airports and/or near populated areas. For certain airports close to populated areas, noise regulations may be even more restrictive. Improvements are therefore sought to minimize the noise of such hybrid power plants on an aircraft.

US-2021/171212-A1 discloses a prior art hybrid turbine engine and a controller configured to reduce a rotational speed of the gas turbine engine core to reduce noise generated by the hybrid turbine engine in response to receiving a signal indicating that a noise level generated by the hybrid turbine engine is above a predetermined noise threshold.

US-2018/346139-A1 discloses a prior art hybrid propulsion system and method of management thereof.

EP-3936712-A1 discloses a prior art hybrid electric powerplant control architecture.

US-2022/042465-A1 discloses a prior art aircraft hybrid propulsion system.

US-2014/156166-A1 discloses a prior art operations support system for an engine.

### SUMMARY

In one aspect of the present invention, there is provided a method of reducing acoustic noise produced by a hybrid power plant having a thermal engine and an electrical motor according to claim 1.

In certain embodiments, the method as defined above and described herein includes one or more of the following features, in whole or in part, and in any combination.

Optionally, and in accordance with the above, the determining of the work split ratio includes determining the work split ratio from a database correlating noise signatures with work split ratios and power levels.

Optionally, and in accordance with any of the above, the determining of the work split ratio from the database includes: determining, from the database, a second work split ratio at which a second noise signature generated by the hybrid power plant is minimal for the power level; determining that the initial work split ratio is different than the second work split ratio; and selecting the work split ratio for which the noise signature is at or below the target noise signature and at or above the second noise signature.

Optionally, and in accordance with any of the above, the selecting of the work split ratio includes selecting the work split ratio corresponding to the second work split ratio, and the operating of the hybrid power plant at the work split ratio includes operating the hybrid power plant at the second work split ratio.

Optionally, and in accordance with any of the above, the target noise signature is a maximum target noise of a target noise signature range, and the determining of the work split ratio includes determining the work split ratio within the target noise signature range.

Optionally, and in accordance with any of the above, the receiving of the signal from the one or more sensors includes receiving data about the initial noise signature, the data including one or more of an overall sound pressure level, a frequency composition, and a tonal amplitude of peak tonal noises of the hybrid power plant.

Optionally, and in accordance with any of the above, the method includes storing the initial noise signature.

In another aspect of the present invention, there is provided a hybrid power plant according to claim 8.

In certain embodiments, the hybrid power plant as defined above and described herein includes one or more of the following features, in whole or in part, and in any combination.

Optionally, and in accordance with any of the above, the modulating of the work split ratio includes determining the work split ratio from a database correlating noise signatures with work split ratios and power levels.

Optionally, and in accordance with any of the above, the determining of the work split ratio from the database includes: determining, from the database, a second work split ratio at which a second noise signature generated by the hybrid power plant is minimal for the power level; determining that the initial work split ratio is different than the second work split ratio; and selecting the work split ratio for which the noise signature is within the target deviation range.

Optionally, and in accordance with any of the above, the selecting of the work split ratio includes selecting the work split ratio corresponding to the second work split ratio.

Optionally, and in accordance with any of the above, the target noise signature is a maximum target noise of a target noise signature range, and the determining of the work split ratio includes determining the work split ratio is within the target noise signature range.

Optionally, and in accordance with any of the above, the receiving of the signal from the one or more sensors includes receiving data about the initial noise signature, the data including one or more of an overall sound pressure level, a frequency composition, and a tonal amplitude of peak tonal noises of the hybrid power plant.

### BRIEF DESCRIPTION OF THE DRAWINGS

Reference is now made to the accompanying figures in which:
Fig. 1 is a schematic top view of an aircraft having hybrid power plants;
Fig. 2A is a schematic view of one of the hybrid power plants of the aircraft of Fig. 1;
Fig. 2B is a front schematic view of the hybrid power plant of Fig. 2A;
Fig. 3A is a flowchart illustrating steps of a method of reducing noise of the hybrid power plant of Fig. 2A;
Fig. 3B is a flowchart illustrating steps of another method of reducing noise of the hybrid power plant of Fig. 2A;
Fig. 4 is a flowchart illustrating steps of a method of operating the aircraft of Fig. 1; and
Fig. 5 is a schematic representation of a controller for the hybrid power plants of the present disclosure, including a computing device.

### DETAILED DESCRIPTION

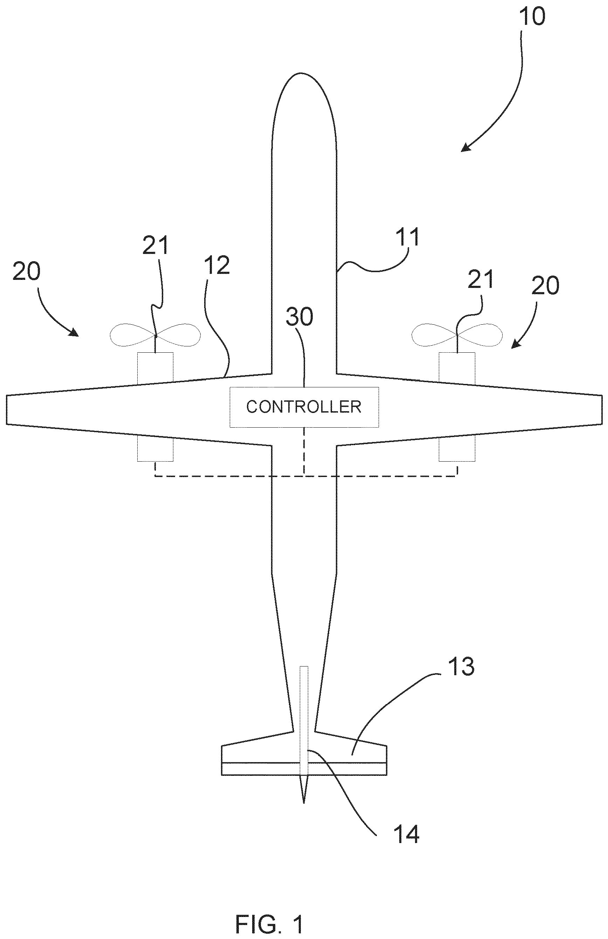

Referring to Fig. 1, an aircraft is shown generally at 10. The aircraft 10 includes a fuselage 11 enclosing a cabin for passengers, wings 12 mounted to the fuselage 11, a horizontal stabilizer 13 mounted to a rear end of the fuselage 11, a vertical stabilizer 14 mounted to the rear end of the fuselage 11. The aircraft 10 is equipped with two hybrid power plants 20, although the aircraft 10 may be equipped with more than two hybrid power plants 20 or only one hybrid power plant 20. A controller 30 is operatively connected to the hybrid power plant(s) 20 via suitable communication links. The controller 30 may be a controller of the aircraft 10. These communication links may be hard wires, wireless links, or any combination thereof. In the embodiment shown, the two hybrid power plants 20 include each a propulsor 21. As depicted, the propulsor 21 may be a propeller or, any other means operable to generate a thrust for propelling the aircraft 10. For instance, the propulsor 21 may be a fan, a rotor, and so on.

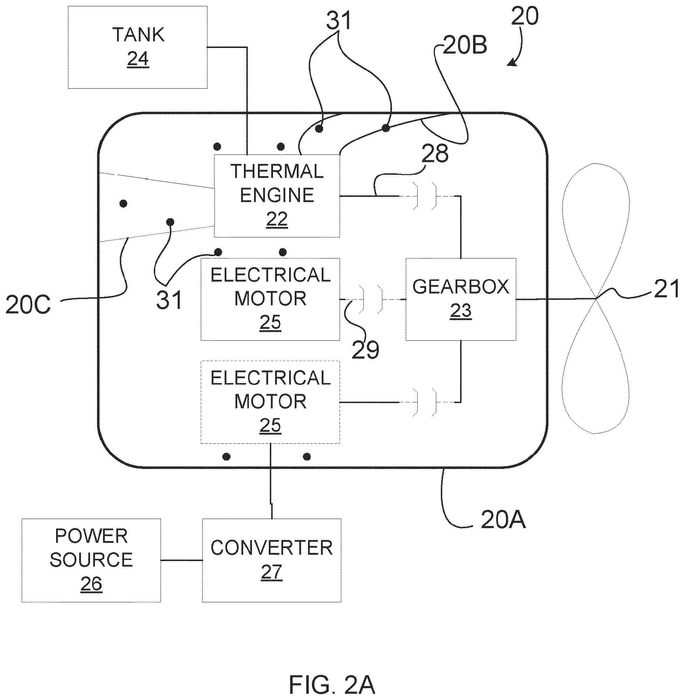

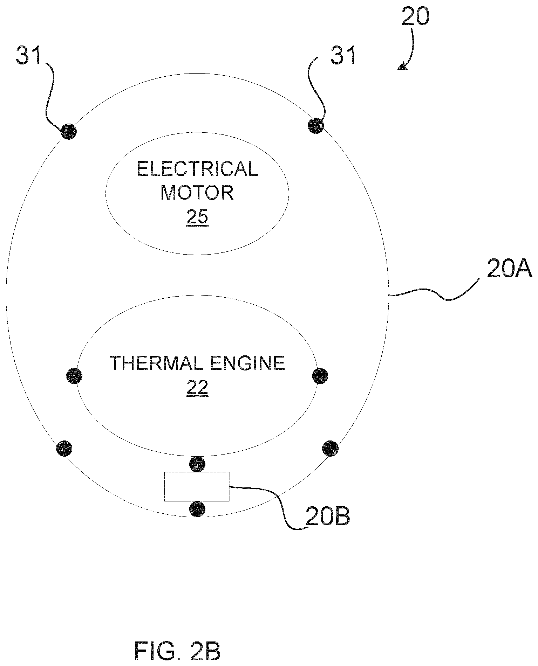

Referring more particularly to Fig. 2, one of the two hybrid power plants 20 is shown and described in greater detail. The description below uses the singular form, but it may apply to each of the hybrid power plants 20 of the aircraft 10 (Fig. 1). In the embodiment shown, the hybrid power plant 20 includes a thermal engine 22 that is drivingly engageable to the propulsor 21 via a gearbox 23. The thermal engine 22 is fluidly connected to a tank 24 that contains a fuel. The thermal engine 22 may be any engine that relies on combustion for its operation. For instance, the thermal engine 22 may be an internal combustion engine such as a piston engine, a rotary engine, or any engine having a combustion chamber of varying volume. The thermal engine 22 may be a gas turbine engine comprising a compressor, a combustor, and a turbine. The hybrid power plant 20 further includes an electrical motor 25 that is drivingly engageable to the propulsor 21 via the gearbox 23. The electrical motor 25 may be operatively connected to a power source 26, such as a battery, via a converter 27. The power source 26 may alternatively be a generator. The converter 27 may be used to transform a direct current from the power source 26 to an alternating current supplied to the electrical motor 25. Any suitable electrical motor 25 may be used.

The gearbox 23 is operable to combine inputs of both of the thermal engine 22 and the electrical motor 25 to deliver a common output to drive a common load, which herein corresponds to the propulsor 21. Stated differently, the gearbox 23 is drivingly engaged by an output shaft 28 of the thermal engine 22 and by an output shaft 29 of the electrical motor 25. The gearbox 23 may include clutches to selectively engage and disengage the thermal engine 22 and the electrical motor 25 from the propulsor 21. For instance, the clutches may disengage one of the thermal engine 22 and the electrical motor 25 if a thrust requirement of the aircraft 10 is such that only power generated by the other of the thermal engine 22 and the electrical motor 25 is required. These clutches may be one-way clutches, friction clutches, and so on.

In some embodiments, the hybrid power plant 20 may include a second electrical motor 25 drivingly engageable to the propulsor 21 via the gearbox 23. In some embodiments, the hybrid power plant 20 may include a second thermal engine (not shown). In some embodiments, the hybrid power plant may include two or more thermal engines drivingly engaged to the propulsor 21, or two or more electrical motors drivingly engaged to the propulsor 21. The two thermal engines may be of a same model. Alternatively, the two thermal engines may be have different power ratings. The two electrical motors may be of a same model. Alternatively, the two electrical motors may have different power ratings. The hybrid power plant 20 may include a first power generator and a second power generator. The first power generator may be a thermal engine, an electrical motor, or any other suitable machine operable to generate power (e.g., torque, propulsive power). The second power generator may be a thermal engine, an electrical motor, or any other suitable machine operable to generate power. Therefore, the expression "hybrid" may include any power plant including two or more machines able to generate power. Hence, the hybrid power plant 20 may include two or more thermal engines, two or more electrical motors, or any combinations of thermal engines, electrical motors, and other machines.

In use, the hybrid power plant 20 generates a noise signature. This noise signature may be caused by a combination of respective noise signatures of the thermal engine 22 and the electrical motor 25. Acoustic sensors, herein after simply "sensors", 31 are disposed at a plurality of locations to measure the noise signature of the hybrid power plant 20. For instance, the hybrid power plant 20 may include a nacelle 20A, an inlet 20B, and an exhaust 20C. The sensors 31 may be located at any location within the nacelle 20A, inlet 20B, and exhaust 20C. The sensors 31 may be pressure transducers, microphones, or any suitable acoustic sensors. The sensors 31 may generate real-time acoustic measurements.

The noise signature of the hybrid power plant 20 may include data about one or more of an overall sound pressure level, a frequency composition, and a tonal amplitude of peak tonal noises of the hybrid power plant 20. The noise signature may vary with a power level of the hybrid power plant 20. The power level may be considered to be a power (e.g., torque) provided by the hybrid power plant 20 to the propulsor 21. The hybrid power plant 20 may vary its power level to vary a thrust generated by the propulsor 21. The noise signature of the hybrid power plant 20 may also be influenced by a work split ratio between the thermal engine 22 and the electrical motor 25. The work split ratio corresponds a power provided by the thermal engine 22 divided by a power provided by the electrical motor 25. The hybrid power plant 20 may be operated at more than one engine split ratios to provide substantially the same power level. For instance, a same power may be provided to the propulsor 21 if the work split ratio is 30% for the electrical motor 25 and 70% for the thermal engine 22 and if the work split ratio is 70% for the electrical motor 25 and 30% of the thermal engine 22. These two different work split ratios may provide the same power to the propulsor 21. However, even if the same power is delivered to the propulsor 21 for these work split ratios, an efficiency of the hybrid power plant 20 and the noise signature of the hybrid power plant 20 may vary. For instance, more noise may be generated by the thermal engine 22 than by the electrical motor 25. Hence, using a work split ratio favoring the thermal engine 22 may generate more noise.

It may be desirable to minimize the noise signature generated by the hybrid power plant 20 in some flight phases of the aircraft 10. For instance, during take-off, climb, descend, and landing, the noise generated by the aircraft 10, and by its hybrid power plant(s) 20 may be subjected to some regulations to limit disturbances to surrounding populations. During cruise, it may be desired to minimise the noise for passenger comfort.

In the embodiment shown, the sensors 31 are used to measure the noise signature of the hybrid power plant(s) 20. This may be done by combining noise signatures measured by the plurality of sensors 31 each disposed in the vicinity of a respective component of the hybrid power plant 20. For instance, noise signatures generated at the inlet 20B, within the nacelle 20A, at the exhaust 20C, proximate the thermal engine 22, and proximate the electrical motor 25 may be combined to yield an overall noise signature of the hybrid power plant 20. In some other embodiments, only one sensor 31 may be used. This sensor 31 may be located at any suitable location permitting the sensor 31 to capture the overall noise signature of the hybrid power plant 20. For instance, this sensor 31 may be located outside the nacelle 20A, proximate the hybrid power plant 20. In some embodiments, this sensor 31 may be located on the wing 12.

Once the noise signature of the hybrid power plant 20 is known, it may be possible to determine that the noise signature is above a target noise signature threshold of the hybrid power plant 20. This threshold may be imposed by regulations (e.g., for flight phases where the aircraft 10 is close to the ground) or may be set in accordance with preferences for passenger comfort (e.g., during cruise). At which point, another work split ratio may be determined. The hybrid power plant 20 may output substantially the same power at this other work split ratio, but may generate a noise signature at or below the target noise signature. Then, the hybrid power plant 20 is operated at this other work split ratio.

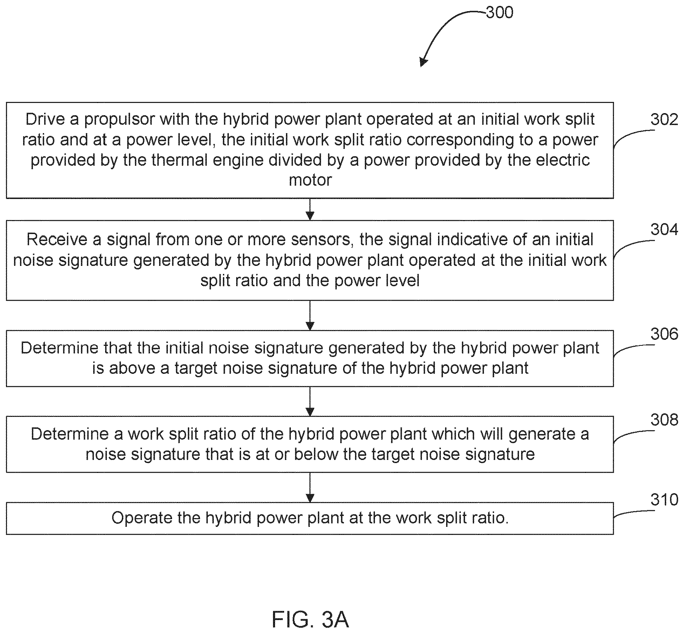

Referring now to Fig. 3A, a method of reducing the noise of the hybrid power plant 20 is shown at 300. The method 300 includes driving the propulsor 21 with the hybrid power plant 20 operated at an initial work split ratio and at a power level at 302; receiving a signal from the one or more acoustic sensors 31, the signal indicative of an initial noise signature generated by the hybrid power plant 20 operated at the initial work split ratio and the power level at 304; determining that the initial noise signature generated by the hybrid power plant 20 is above a target noise signature of the hybrid power plant at 306; determining a work split ratio which will generate a noise signature of the hybrid power plant 20 is at or below the target noise signature at 308; and operating the hybrid power plant 20 at the work split ratio at 310.

In the embodiment shown, the receiving of the signal at 304 includes receiving data about the initial noise signature, the data including one or more of an overall sound pressure level, a frequency composition, and a tonal amplitude of peak tonal noises of the hybrid power plant.

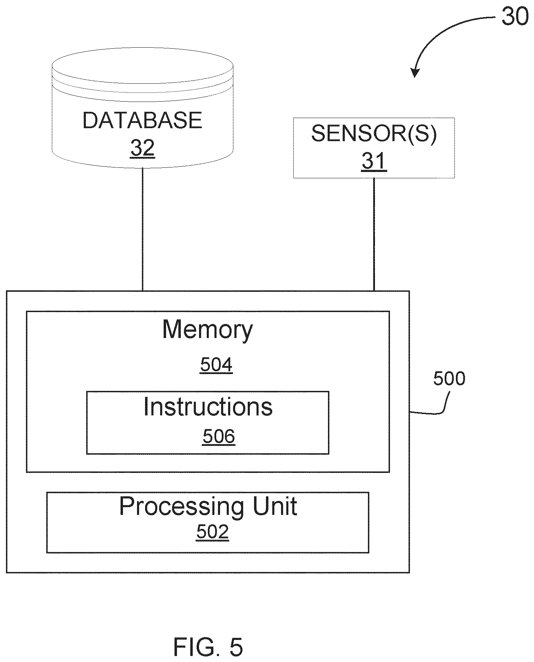

In the present embodiment, the determining of the work split ratio at 308 includes determining the work split ratio from a database 32 (Fig. 5) correlating noise signatures with work split ratios and power levels of the hybrid power plant 20. The determining of the work split ratio from the database may include determining, from the database 32, a second work split ratio at which a second noise signature generated by the hybrid power plant is minimal for the power level; determining that the initial work split ratio is different than the second work split ratio; and selecting the work split ratio for which the noise signature is at or below the target noise signature and at or above the second noise signature. The selecting of the work split ratio may include selecting the work split ratio corresponding to the second work split ratio, and the operating of the hybrid power plant 20 at the work split ratio at 310 may include operating the hybrid power plant 20 at the second work split ratio. In the embodiment shown, the target noise signature is a maximum target noise of a target noise signature range, the determining of the work split ratio includes determining the work split ratio within the target noise signature range.

As explained below, the target noise signature varies as a function of a flight phase of the aircraft 10. Hence, the method 300 includes determining the target noise signature as a function of the flight phase. More specifically, not according to the claims, the method 300 may include determining that the flight phase is one of take-off, landing, descend, and climb. Then, not according to the claims, the determining of the target noise signature may include determining a target far-field noise signature corresponding to a ground noise signature of the hybrid power plant perceived on the ground. In other words, the noise signature of the hybrid power plant 20 may differ from in the vicinity of the hybrid power plant 20 and on the ground. The database 32 may therefore contain data correlating the far-field noise signature of the hybrid power plant 20 with work split ratios and power levels.

The method 300 includes determining that the flight phase is cruise. Then, the determining of the target noise signature includes determining a target cabin noise signature corresponding to a cabin noise signature of the hybrid power plant perceived within a cabin of the aircraft 10. In other words, the noise signature of the hybrid power plant 20 may differ from in the vicinity of the hybrid power plant 20 and inside the cabin. The database 32 may therefore contain data correlating the cabin noise signature of the hybrid power plant 20 with work split ratios and power levels.

The disclosed method 300 may include collecting instantaneous engine noise signatures; dynamically adjusting the engine work split ratio between the thermal engine 22 and the electrical motor 25 to minimize the far-field or targeted noise level in various situations; and storing instantaneous engine noise data to refine future engine operation strategy and identify potential engine problems and maintenance need.

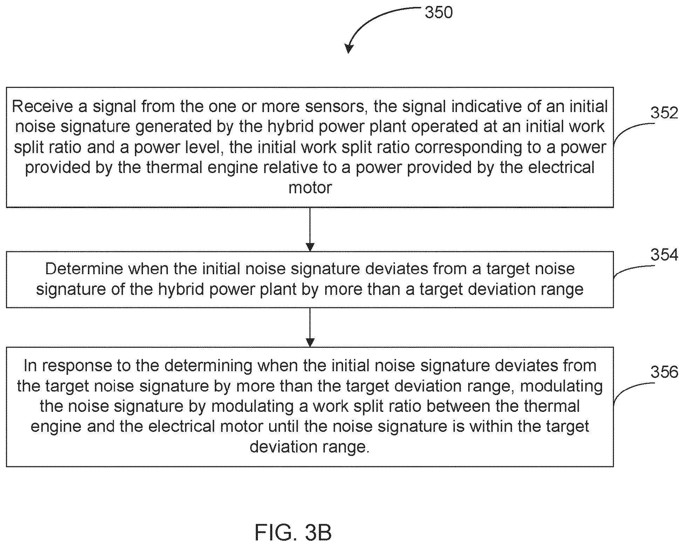

Referring now to Fig. 3B, a method of reducing the noise of the hybrid power plant 20 is shown at 350. The method 350 includes receiving a signal from the one or more sensors 31 at 352, the signal indicative of an initial noise signature generated by the hybrid power plant 20; determining when the initial noise signature deviates from a target noise signature of the hybrid power plant by more than a target deviation range at 354; and in response to the determining when the initial noise signature deviates from the target noise signature by more than the target deviation range, modulating the noise signature by modulating a work split ratio between the thermal engine 22 and the electrical motor 25 until the noise signature is within the target deviation range at 356.

In the embodiment shown, the modulating of the work split ratio at 356 includes determining the work split ratio from a database correlating noise signatures with work split ratios and power levels. The determining of the work split ratio from the database may include determining, from the database, a second work split ratio at which a second noise signature generated by the hybrid power plant is minimal for the power level; determining that the initial work split ratio is different than the second work split ratio; and selecting the work split ratio for which the noise signature is within the target deviation range. The selecting of the work split ratio may include selecting the work split ratio corresponding to the second work split ratio.

In another embodiment, the hybrid power plant 20 may have a standard operation mode and a whisper mode for each power level. The standard operation mode may provide a better energy efficiency of the hybrid power plant 20 than the whisper mode, or may be more desirable for other considerations (e.g., fuel consumption, battery usage, cold or hot temperatures, etc). However, the hybrid power plant 20 may generate less noise in the whisper mode, but with efficiency and/or other penalties. During use of the aircraft 10, it may be determined that the aircraft is subjected to noise regulations. At which point, the work split ratio of the hybrid power plant 20 may be varied to switch the hybrid power plant 20 from the standard operation mode to the whisper mode to decrease the noise below an acceptable level. In some embodiments, the determining that the aircraft 10 is subjected to noise regulations may be achieved by determining that an altitude of the aircraft 10 is below a first threshold for take-off, climb, descend, and landing phases and above a second threshold for cruise. When the altitude is below the first threshold, the far-field noise signature is to be minimized for surrounding populations on the ground whereas, when the altitude is above the second threshold, the cabin noise signature is to be minimized for passenger comfort.

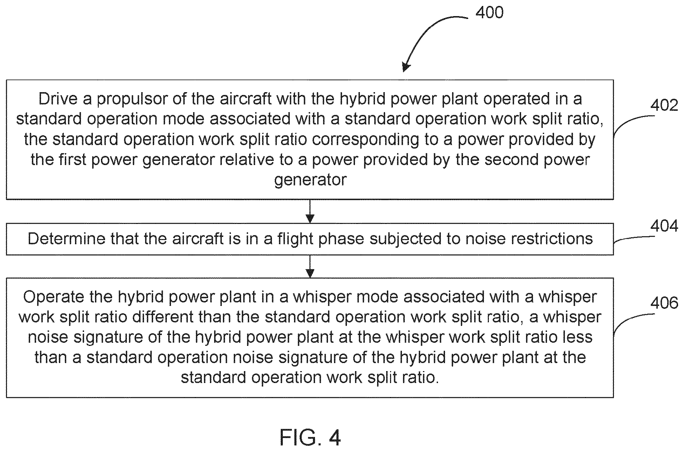

Referring to Fig. 4, a method of operating the aircraft is shown at 400, the method 400 includes driving the propulsor(s) 21 of the aircraft with the hybrid power plant(s) 20 operated in a standard operation mode associated with a standard operation work split ratio at 402; determining that the aircraft 10 is subjected to noise restrictions at 404; and operating the hybrid power plant(s) 20 of the aircraft 10 in a whisper mode associated with a whisper work split ratio different than the standard operation work split ratio at 406. A whisper noise signature of the hybrid power plant at the whisper work split ratio is less than a standard operation noise signature of the hybrid power plant at the standard operation work split ratio.

The determining that the aircraft 10 is in the flight phase subjected to noise restrictions at 404 includes determining that the flight phase is cruise.

In the depicted embodiment, the operating of the hybrid power plant(s) 20 in the whisper mode at 406 includes determining the whisper work split ratio by selecting, from the database 32 correlating noise signatures with work split ratios, a work split ratio at which a noise signature of the hybrid power plant(s) 20 is at or below a target noise signature.

In some embodiments, a pilot of the aircraft 10 may actuate the whisper mode with a switch. The determining that the aircraft is in a flight phase subjected to noise restrictions at 404 may include receiving a signal from the switch; the signal indicative that the hybrid power plant(s) 20 is to be operated with a work split ratio generating noise at or below a target noise signature.

With reference to Fig. 5, an example of a computing device 500 is illustrated. For simplicity only one computing device 500 is shown but the system may include more computing devices 500 operable to exchange data. The computing devices 500 may be the same or different types of devices. The controller 30 may be implemented with one or more computing devices 500. Note that the controller 30 can be implemented as part of a full-authority digital engine controls (FADEC) or other similar device, including electronic engine control (EEC), engine control unit (ECU), electronic propeller control, propeller control unit, and the like. In some embodiments, the controller 30 is implemented as a Flight Data Acquisition Storage and Transmission system, such as a FAST^{™} system. The controller 30 may be implemented in part in the FAST^{™} system and in part in the EEC. Other embodiments may also apply.

The computing device 500 comprises a processing unit 502 and a memory 504 which has stored therein computer-executable instructions 506. The processing unit 502 may comprise any suitable devices configured to implement the method 300 such that instructions 506, when executed by the computing device 500 or other programmable apparatus, may cause the functions/acts/steps performed as part of the method 300 as described herein to be executed. The processing unit 502 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 504 may comprise any suitable known or other machine-readable storage medium. The memory 504 may comprise non-transitory computer readable storage medium, for example, but not limited to, an electronic, magnetic, optical, electromagnetic, infrared, or semiconductor system, apparatus, or device, or any suitable combination of the foregoing. The memory 504 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 504 may comprise any storage means (e.g., devices) suitable for retrievably storing machine-readable instructions 506 executable by processing unit 502.

The methods and systems for reducing noise of an hybrid power plant described herein may be implemented in a high level procedural or object oriented programming or scripting language, or a combination thereof, to communicate with or assist in the operation of a computer system, for example the computing device 500. Alternatively, the methods and systems for reducing noise of an hybrid power plant may be implemented in assembly or machine language. The language may be a compiled or interpreted language. Program code for implementing the methods and systems for reducing noise of an hybrid power plant may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for reducing noise of an hybrid power plant may also be considered to be implemented by way of a non-transitory computer-readable storage medium having a computer program stored thereon. The computer program may comprise computer-readable instructions which cause a computer, or more specifically the processing unit 502 of the computing device 500, to operate in a specific and predefined manner to perform the functions described herein, for example those described in the method 300.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The targeted acoustic noise reduction is in the cabin and may be, not according to the claims, in the far-field, in the vicinity of the aircraft or anywhere else deemed appropriate. The disclosed methods 300, 400 are applicable for two, or any larger number of engines coupled with one another. The methods 300, 400 are applicable for engines of any type (electric, thermodynamic, or other). The quantity of acoustic measurement(s) may be any deemed necessary. The acoustic measurement(s) may be located anywhere in the aircraft deemed necessary, inside the nacelle or elsewhere. The acoustic measurement(s) may be of any type deemed necessary.

The embodiments described in this document provide non-limiting examples of possible implementations of the present technology. Upon review of the present disclosure, a person of ordinary skill in the art will recognize that changes may be made to the embodiments described herein without departing from the scope defined by the appended claims.

## Claims

1. A method (300) of reducing acoustic noise produced by a hybrid power plant (20) having a thermal engine (22) and an electrical motor (25), the method comprising:
driving (302) a propulsor (21) with the hybrid power plant (20) operated at an initial work split ratio and at a power level, the initial work split ratio corresponding to a power provided by the thermal engine (22) divided by a power provided by the electrical motor (25);
receiving (304) a signal from one or more sensors (31), the signal indicative of an initial noise signature generated by the hybrid power plant (20) operated at the initial work split ratio and the power level;
determining (306) that the initial noise signature generated by the hybrid power plant (20) is above a target noise signature of the hybrid power plant (20);
determining (308) a work split ratio of the hybrid power plant (20) which will generate a noise signature that is at or below the target noise signature; and
operating (310) the hybrid power plant (20) at the work split ratio, wherein the determining (306) that the initial noise signature is above the target noise signature includes determining the target noise signature as a function of a flight phase,
wherein
the determining of the target noise signature as a function of the flight phase includes determining that the flight phase is cruise; and **characterised in that**
the determining of the target noise signature includes determining a target cabin noise signature corresponding to a cabin noise signature of the hybrid power plant (20) perceived from within a cabin of an aircraft (10) equipped with the hybrid power plant (20).

2. The method (300) of claim 1, wherein the determining of the work split ratio includes determining the work split ratio from a database (32) correlating noise signatures with work split ratios and power levels.

3. The method (300) of claim 2, wherein the determining of the work split ratio from the database (32) includes:
determining, from the database (32), a second work split ratio at which a second noise signature generated by the hybrid power plant (20) is minimal for the power level;
determining that the initial work split ratio is different than the second work split ratio; and
selecting the work split ratio for which the noise signature is at or below the target noise signature and at or above the second noise signature.

4. The method (300) of claim 3, wherein the selecting of the work split ratio includes selecting the work split ratio corresponding to the second work split ratio, and the operating of the hybrid power plant (20) at the work split ratio includes operating the hybrid power plant (20) at the second work split ratio.

5. The method (300) of any preceding claim, wherein the target noise signature is a maximum target noise of a target noise signature range, and the determining (308) of the work split ratio includes determining the work split ratio within the target noise signature range.

6. The method (300) of any preceding claim, wherein the receiving of the signal from the one or more sensors (31) includes receiving data about the initial noise signature, the data including one or more of an overall sound pressure level, a frequency composition, and a tonal amplitude of peak tonal noises of the hybrid power plant (20).

7. The method (300) of claim 6, further comprising storing the initial noise signature.

8. A hybrid power plant (20), comprising:
a thermal engine (22) and an electrical motor (25) both drivingly engageable to a propulsor (21);
one or more sensors (31) operable to measure a noise signature generated by the thermal engine (22) and the electrical motor (25); and
a controller (30) operatively connected to the one or more sensors (31), the controller (30) having a processing unit (502) and a computer-readable medium having instructions (506) stored thereon executable by the processing unit (502) to cause the controller (30) to execute:
receiving (352) a signal from the one or more sensors (31), the signal indicative of an initial noise signature generated by the hybrid power plant (20) operated at an initial work split ratio and a power level, the initial work split ratio corresponding to a power provided by the thermal engine (22) relative to a power provided by the electrical motor (25);
determining (354) when the initial noise signature deviates from a target noise signature of the hybrid power plant (20) by more than a target deviation range; and
in response (356) to the determining (354) when the initial noise signature deviates from the target noise signature by more than the target deviation range, modulating the noise signature by modulating a work split ratio between the thermal engine (22) and the electrical motor (25) until the noise signature is within the target deviation range, wherein the determining when the initial noise signature deviates from the target noise signature includes determining the target noise signature as a function of a flight phase, wherein
the determining of the target noise signature as a function of the flight phase includes determining that the flight phase is cruise; and **characterised in that**
the determining of the target noise signature includes determining a target cabin noise signature corresponding to a cabin noise signature of the hybrid power plant (20) perceived from within a cabin of an aircraft (10) equipped with the hybrid power plant (20).

9. The hybrid power plant (20) of claim 8, wherein the modulating of the work split ratio includes determining the work split ratio from a database (32) correlating noise signatures with work split ratios and power levels.

10. The hybrid power plant (20) of claim 9, wherein the determining of the work split ratio from the database (32) includes:
determining, from the database (32), a second work split ratio at which a second noise signature generated by the hybrid power plant (20) is minimal for the power level;
determining that the initial work split ratio is different than the second work split ratio; and
selecting the work split ratio for which the noise signature is within the target deviation range.

11. The hybrid power plant (20) of claim 10, wherein the step of selecting the work split ratio for which the noise signature is within the target deviation range comprises selecting the work split ratio to correspond to the second work split ratio.

12. The hybrid power plant (20) of any of claims 8 to 11, wherein the target noise signature is a maximum target noise of a target noise signature range, and the determining of the work split ratio includes determining the work split ratio is within the target noise signature range.

13. The hybrid power plant (20) of any of claims 8 to 12, wherein the receiving of the signal from the one or more sensors (31) includes receiving data about the initial noise signature, the data including one or more of an overall sound pressure level, a frequency composition, and a tonal amplitude of peak tonal noises of the hybrid power plant (20).

## Patentansprüche

1. Verfahren (300) zur Reduzierung von akustischen Geräuschen, die von einem Hybridkraftwerk (20), das eine Wärmekraftmaschine (22) und einen Elektromotor (25) aufweist, erzeugt werden, wobei das Verfahren Folgendes umfasst:
Antreiben (302) eines Schuberzeugers (21) mit dem Hybridkraftwerk (20), das mit einem anfänglichen Arbeitsteilungsverhältnis und mit einem Leistungspegel betrieben wird, wobei das anfängliche Arbeitsteilungsverhältnis einer von der Wärmekraftmaschine (22) bereitgestellten Leistung geteilt durch eine von dem Elektromotor (25) bereitgestellte Leistung entspricht;
Empfangen (304) eines Signals von einem oder mehreren Sensoren (31), wobei das Signal eine anfängliche Geräuschsignatur angibt, die von dem Hybridkraftwerk (20) erzeugt wird, das mit dem anfänglichen Arbeitsteilungsverhältnis und dem Leistungspegel betrieben wird;
Bestimmen (306), dass die von dem Hybridkraftwerk (20) erzeugte anfängliche Geräuschsignatur über einer Zielgeräuschsignatur des Hybridkraftwerks (20) liegt;
Bestimmen (308) eines Arbeitsteilungsverhältnisses des Hybridkraftwerks (20), das eine Geräuschsignatur erzeugen wird, die gleich oder kleiner als die Zielgeräuschsignatur ist; und
Betreiben (310) des Hybridkraftwerks (20) mit dem Arbeitsteilungsverhältnis, wobei das Bestimmen (306), dass die anfängliche Geräuschsignatur über der Zielgeräuschsignatur liegt, Bestimmen der Zielgeräuschsignatur in Abhängigkeit von einer Flugphase beinhaltet, wobei
das Bestimmen der Zielgeräuschsignatur in Abhängigkeit von der Flugphase Bestimmen beinhaltet, dass es sich bei der Flugphase um Reiseflug handelt; und **dadurch gekennzeichnet, dass**
das Bestimmen der Zielgeräuschsignatur Bestimmen einer Zielkabinengeräuschsignatur beinhaltet, die einer Kabinengeräuschsignatur des Hybridkraftwerks (20) entspricht, die von innerhalb einer Kabine eines mit dem Hybridkraftwerk (20) ausgestatteten Flugzeugs (10) wahrgenommen wird.

2. Verfahren (300) nach Anspruch 1, wobei das Bestimmen des Arbeitsteilungsverhältnisses Bestimmen des Arbeitsteilungsverhältnisses aus einer Datenbank (32) beinhaltet, die Geräuschsignaturen mit Arbeitsteilungsverhältnissen und Leistungspegeln korreliert.

3. Verfahren (300) nach Anspruch 2, wobei das Bestimmen des Arbeitsteilungsverhältnisses aus der Datenbank (32) Folgendes beinhaltet:
Bestimmen eines zweiten Arbeitsteilungsverhältnisses aus der Datenbank (32), bei dem eine zweite Geräuschsignatur, die von dem Hybridkraftwerk (20) erzeugt wird, für den Leistungspegel minimal ist;
Bestimmen, dass das anfängliche Arbeitsteilungsverhältnis sich von dem zweiten Arbeitsteilungsverhältnis unterscheidet; und
Auswählen des Arbeitsteilungsverhältnisses, bei dem die Geräuschsignatur gleich oder kleiner als die Zielgeräuschsignatur und gleich oder größer als die zweite Geräuschsignatur ist.

4. Verfahren (300) nach Anspruch 3, wobei das Auswählen des Arbeitsteilungsverhältnisses Auswählen des Arbeitsteilungsverhältnisses beinhaltet, das dem zweiten Arbeitsteilungsverhältnis entspricht, und das Betreiben des Hybridkraftwerks (20) mit dem Arbeitsteilungsverhältnis Betreiben des Hybridkraftwerks (20) mit dem zweiten Arbeitsteilungsverhältnis beinhaltet.

5. Verfahren (300) nach einem der vorhergehenden Ansprüche, wobei die Zielgeräuschsignatur ein maximales Zielgeräusch eines Zielgeräuschsignaturbereichs ist und das Bestimmen (308) des Arbeitsteilungsverhältnisses Bestimmen des Arbeitsteilungsverhältnisses innerhalb des Zielgeräuschsignaturbereichs beinhaltet.

6. Verfahren (300) nach einem der vorhergehenden Ansprüche, wobei das Empfangen des Signals von dem einen oder den mehreren Sensoren (31) Empfangen von Daten über die anfängliche Geräuschsignatur beinhaltet, wobei die Daten eines oder mehrere eines Gesamtschalldruckpegels, einer Frequenzzusammensetzung und einer Tonamplitude von Spitzentongeräuschen des Hybridkraftwerks (20) beinhalten.

7. Verfahren (300) nach Anspruch 6, ferner umfassend Speichern der anfänglichen Geräuschsignatur.

8. Hybridkraftwerk (20), umfassend:
eine Wärmekraftmaschine (22) und einen Elektromotor (25), die beide antriebsmäßig mit einem Schuberzeuger (21) in Eingriff bringbar sind;
einen oder mehrere Sensoren (31), die dazu betreibbar sind, eine von der Wärmekraftmaschine (22) und dem Elektromotor (25) erzeugte Geräuschsignatur zu messen; und
einen Steuerung (30), die mit dem einen oder den mehreren Sensoren (31) wirkverbunden ist, wobei die Steuerung (30) eine Verarbeitungseinheit (502) und ein computerlesbares Medium aufweist, das darauf gespeicherten Anweisungen (506) aufweist, die von der Verarbeitungseinheit (502) ausführbar sind, um die Steuerung (30) zur Ausführung der Folgenden zu veranlassen:
Empfangen (352) eines Signals von dem einen oder den mehreren Sensoren (31), wobei das Signal eine anfängliche Geräuschsignatur angibt, die von dem Hybridkraftwerk (20) erzeugt wird, das mit einem anfänglichen Arbeitsteilungsverhältnis und einem Leistungspegel betrieben wird, wobei das anfängliche Arbeitsteilungsverhältnis einer von der Wärmekraftmaschine (22) bereitgestellten Leistung relativ zu einer von dem Elektromotor (25) bereitgestellten Leistung entspricht;
Bestimmen (354), wann die anfängliche Geräuschsignatur um mehr als einen Zielabweichungsbereich von einer Zielgeräuschsignatur des Hybridkraftwerks (20) abweicht; und
als Reaktion (356) auf das Bestimmen (354), dass die anfängliche Geräuschsignatur um mehr als den Zielabweichungsbereich von der Zielgeräuschsignatur abweicht, Modulieren der Geräuschsignatur durch Modulieren eines Arbeitsteilungsverhältnisses zwischen der Wärmekraftmaschine (22) und dem Elektromotor (25), bis die Geräuschsignatur innerhalb des Zielabweichungsbereichs liegt, wobei das Bestimmen, dass die anfängliche Geräuschsignatur von der Zielgeräuschsignatur abweicht, Bestimmen der Zielgeräuschsignatur in Abhängigkeit von einer Flugphase beinhaltet, wobei das Bestimmen der Zielgeräuschsignatur in Abhängigkeit von der Flugphase Bestimmen beinhaltet, dass es sich bei der Flugphase um Reiseflug handelt; und **dadurch gekennzeichnet, dass**
das Bestimmen der Zielgeräuschsignatur Bestimmen einer Zielkabinengeräuschsignatur beinhaltet, die einer Kabinengeräuschsignatur des Hybridkraftwerks (20) entspricht, die von innerhalb einer Kabine eines mit dem Hybridkraftwerk (20) ausgestatteten Flugzeugs (10) wahrgenommen wird.

9. Hybridkraftwerk (20) nach Anspruch 8, wobei das Modulieren des Arbeitsteilungsverhältnisses Bestimmen des Arbeitsteilungsverhältnisses aus einer Datenbank (32) beinhaltet, die Geräuschsignaturen mit Arbeitsteilungsverhältnissen und Leistungspegeln korreliert.

10. Hybridkraftwerk (20) nach Anspruch 9, wobei das Bestimmen des Arbeitsteilungsverhältnisses aus der Datenbank (32) Folgendes beinhaltet:
Bestimmen eines zweiten Arbeitsteilungsverhältnisses aus der Datenbank (32), bei dem eine zweite Geräuschsignatur, die von dem Hybridkraftwerk (20) erzeugt wird, für den Leistungspegel minimal ist;
Bestimmen, dass das anfängliche Arbeitsteilungsverhältnis sich von dem zweiten Arbeitsteilungsverhältnis unterscheidet; und
Auswählen des Arbeitsteilungsverhältnisses, bei dem die Geräuschsignatur innerhalb des Zielabweichungsbereichs liegt.

11. Hybridkraftwerk (20) nach Anspruch 10, wobei der Schritt des Auswählens des Arbeitsteilungsverhältnisses, bei dem die Geräuschsignatur innerhalb des Zielabweichungsbereichs liegt, Auswählen des Arbeitsteilungsverhältnisses, um dem zweiten Arbeitsteilungsverhältnis zu entsprechen, umfasst.

12. Hybridkraftwerk (20) nach einem der Ansprüche 8 bis 11, wobei die Zielgeräuschsignatur ein maximales Zielgeräusch eines Zielgeräuschsignaturbereichs ist und das Bestimmen des Arbeitsteilungsverhältnisses Bestimmen, dass das Arbeitsteilungsverhältnis innerhalb des Zielgeräuschsignaturbereichs liegt, beinhaltet.

13. Hybridkraftwerk (20) nach einem der Ansprüche 8 bis 12, wobei das Empfangen des Signals von dem einen oder den mehreren Sensoren (31) Empfangen von Daten über die anfängliche Geräuschsignatur beinhaltet, wobei die Daten eines oder mehrere eines Gesamtschalldruckpegels, einer Frequenzzusammensetzung und einer Tonamplitude von Spitzentongeräuschen des Hybridkraftwerks (20) beinhalten.

## Revendications

1. Procédé (300) de réduction du bruit acoustique produit par un groupe motopropulseur hybride (20) présentant un moteur thermique (22) et un moteur électrique (25), le procédé comprenant :
l'entraînement (302) d'un propulseur (21) avec le groupe motopropulseur hybride (20) fonctionnant à un rapport de répartition de travail initial et à un niveau de puissance, le rapport de répartition de travail initial correspondant à une puissance fournie par le moteur thermique (22) divisée par une puissance fournie par le moteur électrique (25) ;
la réception (304) d'un signal provenant d'un ou plusieurs capteurs (31), le signal indiquant une signature de bruit initiale générée par le groupe motopropulseur hybride (20) fonctionnant au rapport de répartition de travail initial et au niveau de puissance ;
la détermination (306) que la signature de bruit initiale générée par le groupe motopropulseur hybride (20) est supérieure à une signature de bruit cible du groupe motopropulseur hybride (20) ;
la détermination (308) d'un rapport de répartition de travail du groupe motopropulseur hybride (20) qui générera une signature de bruit qui est égale ou inférieure à la signature de bruit cible ; et
le fonctionnement (310) du groupe motopropulseur hybride (20) au rapport de répartition de travail, dans lequel la détermination (306) que la signature de bruit initiale est supérieure à la signature de bruit cible comporte la détermination de la signature de bruit cible en fonction d'une phase de vol, dans lequel
la détermination de la signature de bruit cible en fonction de la phase de vol comporte la détermination que la phase de vol est une phase de croisière ; et **caractérisé en ce que**
la détermination de la signature de bruit cible comporte la détermination d'une signature de bruit de cabine cible correspondant à une signature de bruit de cabine du groupe motopropulseur hybride (20) perçue depuis l'intérieur d'une cabine d'un aéronef (10) équipé du groupe motopropulseur hybride (20).

2. Procédé (300) selon la revendication 1, dans lequel la détermination du rapport de répartition de travail comporte la détermination du rapport de répartition de travail à partir d'une base de données (32) corrélant les signatures de bruit avec les rapports de répartition de travail et les niveaux de puissance.

3. Procédé (300) selon la revendication 2, dans lequel la détermination du rapport de répartition de travail à partir de la base de données (32) comporte :
la détermination, à partir de la base de données (32), d'un second rapport de répartition de travail auquel une seconde signature de bruit générée par le groupe motopropulseur hybride (20) est minimale pour le niveau de puissance ;
la détermination que le rapport initial de répartition de travail est différent du second rapport de répartition de travail ; et
la sélection du rapport de répartition de travail pour lequel la signature de bruit est égale ou inférieure à la signature de bruit cible et égale ou supérieure à la seconde signature de bruit.

4. Procédé (300) selon la revendication 3, dans lequel la sélection du rapport de répartition de travail comporte la sélection du rapport de répartition de travail correspondant au second rapport de répartition de travail, et le fonctionnement du groupe motopropulseur hybride (20) au rapport de répartition de travail comporte le fonctionnement du groupe motopropulseur hybride (20) au second rapport de répartition de travail.

5. Procédé (300) selon une quelconque revendication précédente, dans lequel la signature de bruit cible est un bruit cible maximal d'une plage de signatures de bruit cible, et la détermination (308) du rapport de répartition de travail comporte la détermination du rapport de répartition de travail au sein de la plage de signatures de bruit cible.

6. Procédé (300) selon une quelconque revendication précédente, dans lequel la réception du signal provenant de l'un ou plusieurs capteurs (31) comporte la réception de données sur la signature de bruit initiale, les données comportant un ou plusieurs d'un niveau de pression acoustique global, d'une composition de fréquence et d'une amplitude tonale des bruits tonaux de crête du groupe motopropulseur hybride (20).

7. Procédé (300) selon la revendication 6, comprenant également le stockage de la signature de bruit initiale.

8. Groupe motopropulseur hybride (20), comprenant :
un moteur thermique (22) et un moteur électrique (25) pouvant tous deux être mis en prise par entraînement avec un propulseur (21) ;
un ou plusieurs capteurs (31) permettant de mesurer une signature de bruit générée par le moteur thermique (22) et le moteur électrique (25) ; et
un dispositif de commande (30) relié fonctionnellement aux un ou plusieurs capteurs (31), le dispositif de commande (30) présentant une unité de traitement (502) et un support lisible par ordinateur sur lequel sont stockées des instructions (506) exécutables par l'unité de traitement (502) pour amener le dispositif de commande (30) à exécuter :
la réception (352) d'un signal provenant de l'un ou plusieurs capteurs (31), le signal indiquant une signature de bruit initiale générée par le groupe motopropulseur hybride (20) fonctionnant à un rapport de répartition de travail initial et à un niveau de puissance, le rapport de répartition de travail initial correspondant à une puissance fournie par le moteur thermique (22) par rapport à une puissance fournie par le moteur électrique (25) ;
la détermination (354) de quand la signature de bruit initiale s'écarte d'une signature de bruit cible du groupe motopropulseur hybride (20) de plus d'une plage d'écart cible ; et
en réponse (356) à la détermination (354) de quand la signature de bruit initiale s'écarte de la signature de bruit cible de plus de la plage d'écart cible, la modulation de la signature de bruit par la modulation d'un rapport de répartition de travail entre le moteur thermique (22) et le moteur électrique (25) jusqu'à ce que la signature de bruit soit au sein de la plage d'écart cible, dans lequel la détermination de quand la signature de bruit initiale s'écarte de la signature de bruit cible comporte la détermination de la signature de bruit cible en fonction d'une phase de vol, dans lequel
la détermination de la signature de bruit cible en fonction de la phase de vol comporte la détermination que la phase de vol est une phase de croisière ; et **caractérisé en ce que**
la détermination de la signature de bruit cible comporte la détermination d'une signature de bruit de cabine cible correspondant à une signature de bruit de cabine du groupe motopropulseur hybride (20) perçue depuis l'intérieur d'une cabine d'un aéronef (10) équipé du groupe motopropulseur hybride (20).

9. Groupe motopropulseur hybride (20) selon la revendication 8, dans lequel la modulation du rapport de répartition de travail comporte la détermination du rapport de répartition de travail à partir d'une base de données (32) corrélant les signatures de bruit avec les rapports de répartition de travail et les niveaux de puissance.

10. Groupe motopropulseur hybride (20) selon la revendication 9, dans lequel la détermination du rapport de répartition de travail à partir de la base de données (32) comporte :
la détermination, à partir de la base de données (32), d'un second rapport de répartition de travail auquel une seconde signature de bruit générée par le groupe motopropulseur hybride (20) est minimale pour le niveau de puissance ;
la détermination que le rapport initial de répartition de travail est différent du second rapport de répartition de travail ; et
la sélection du rapport de répartition de travail pour lequel la signature de bruit se situe au sein de la plage d'écart cible.

11. Groupe motopropulseur hybride (20) selon la revendication 10, dans lequel l'étape de sélection du rapport de répartition de travail pour lequel la signature de bruit se situe au sein de la plage d'écart cible comprend la sélection du rapport de répartition de travail pour correspondre au second rapport de répartition de travail.

12. Groupe motopropulseur hybride (20) selon l'une quelconque des revendications 8 à 11, dans lequel la signature de bruit cible est un bruit cible maximal d'une plage de signatures de bruit cible, et la détermination du rapport de répartition de travail comporte la détermination que le rapport de répartition de travail est au sein de la plage de signatures de bruit cible.

13. Groupe motopropulseur hybride (20) selon l'une quelconque des revendications 8 à 12, dans lequel la réception du signal provenant de l'un ou plusieurs capteurs (31) comporte la réception de données sur la signature de bruit initiale, les données comportant l'un ou plusieurs d'un niveau de pression acoustique global, d'une composition de fréquence et d'une amplitude tonale des bruits tonaux de crête du groupe motopropulseur hybride (20).
